# EUROPEAN PATENT SPECIFICATION

(11) **EP 0 587 807 B1**
(45) Date of publication and mention of the grant of the patent: **10.09.1997**
(21) Application number: 92914740.3
(22) Date of filing: 26.06.1992
(51) Int. Cl.: C02F 3/32

(54) **A PROCESS FOR DE-POLLUTION BY MEANS OF BIODEGRADATION AND MEANS FOR PERFORMING THE SAME**
ENTSORGUNGSVERFAHREN DURCH BIOLOGISCHEN ABBAU UND MITTEL ZUR DURCHFÜHRUNG DES VERFAHRENS
PROCEDE DE DEPOLLUTION PAR DEGRADATION BIOLOGIQUE ET MOYENS DE MISE EN OEUVRE

(30) Priority: 09.07.1991 IT RM91049
(43) Date of publication of application: 23.03.1994
(73) Proprietor: Blundo, Roberto, I-00133 Roma (IT)
(72) Inventor: Blundo, Roberto, I-00133 Roma (IT)
(74) Representative: Mascioli, Alessandro, Prof.Dr.
(86) International application number: IT9200068
(87) International publication number: WO9301138

(56) References cited:
- EP-A- 0 140 336
- US-A- 4 044 500

## Description

The present invention concerns a de-pollution process by means of biodegradation and the means for performing the same, like natural sea bacteria.

The problem of pollution is considered the worst mankind must afford and solve in these last years of the 20th century.

It has already showed up in the past when, for making determined areas inhabitable, man had to considerably disturb the pre-existing conditions and balances. But this had occurred gradually, following to the population's development: the agricultural transformations took place slowly, with the possibility of a gradual ecological adaptation; the building and industrial activities were limited and consequently also the resulting pollution was limited and the solid waste, spread on the soil or earthed, were quickly degraded.

In the past, it has been possible to obviate to the pollution produced in urban areas or by industrial installations by the dilution of the wastes into rivers or seas where they were transformed, due to the action of aerobic and anaerobic micro-organisms, into harmless products. But in the last decades the quick increase of the world population and the parallel development of the industrial activities have produced strong concentrations of domestic and industrial waste. To this kind of pollution another kind must be added, deriving from local catastrophies, like the dispersion into the ambient of Seveso of 'dioxine', the outflow of raw oil in the Alaska Gulf, in the Gulf of Mexico, in the Persian Gulf and in the Mediterranean Sea near Genoa; like the radioactive contaminations due to the fire in the electronuclear Chernobyl-central, etc. Therefore the old system of dilution in the waters and of the spontaneous biodegradation is no longer effective due to its slowness that does not allow to make the enormous waste mass produced in continuity, harmless.

Scientifical and technological researches onto the use of natural bacteria are actually mainly aiming to the utilization of bacteria in drinking water.

The process according to the present invention is based onto the use of natural sea-water bacteria, that are not genetically manipulated and not pathogenous, in selectioned stocks and made even more active in relation to the specifical substances to demolish and therefore to mineralize.

It is well known that in the sea are living, beyond others, oleophilous, lipophagous, lipolytical and hydrophobical bacteria that are naturally destined to the metabolization and biodegradation of various oily ad organic substances.

Relating to the degradative specificity of the lipidic products, above mentioned bacteric "pools" are different in the metabolization speed of the organic carbon contained therein.

Particularly the oleophilus bacteria are able to take nourishment from any organic molecule - of animal, mineral or vegetal origin - if only together with carbon, also azote and phosphorous are equally balanced, as they are nutrients indispensable to most marine micro-organisms.

However, this capacity that could seem to be an advantage, shows to be the contrary when these bacteria are called to destroy mineral lipo-molecules, as said stocks are not specific and therefore rather slow in their processes.

The lipophagous bacteria, even if not being specific for the degradation of raw oil, have - for this purpose - better features than the oleophilus bactera, as they make use, as a carbon source, only of those lipidic molecules containing it. Ths features makes its demolition metabolism somewhat quicker.

For what concerns the specificity, for sure the lipolytic bacteria are more effective, as they have the capacity of selecting the organic molecules from which they can take their nourishment; infact, the are not able to destroy any lipid - of animal, vegetal or mineral origin -, but each specific stock metabolizes the ones ot the others.

The optimum is represented by the hydrophobic bacteria which, due to their ciliar cytoplasmatic structure, get stuck to the lipidic surface transforming the same, in the "interfacies" with the water, into tri-, di- and monoglycerids, unsoluble fat acids that are a natural component of the food chain. This makes their specificity, as well as the enormous reproduction quickness (about twenty minutes), evident and this quickness allows them also to destroy the most complicated lipidic chains.

The qualification of above mentioned bacteria, called 'marine', intends to underline their "specific love" for the sea-water ambients, while the qualification of 'natural' wants to underline that they live in nature, specially in those areas of the globe that have suffered from ecological disasters during millennia - like the breaking of oil streams and the following outflow of raw oil - caused by earthquakes and/or tectonic landslides, to which the same nature has provided remedies (natural bio-remediation) but with very long times.

Therefore, it is obvious that for the reduction of such bacteria it is not necessary to appeal to genetic engeneering techniques, as the different stocks - mainly Pseudomonas - are found in above mentioned areas, are isolated with appropriate micro-biological methods based on the use of selected culture grounds, and classified according to their particular features, and thus they will form the base of the bacteriotheque from which single bacteria will be taken for the preparation of the specific bacteric societies needed (said 'societies' consist in a plurality of "pools" that are in turn formed by groups of bacteria stocks having similar features for what concerns degradation).

So as to make the bacteria reproduce in the chosen stock, quickly and in excess, and so as to collect the bio-mass when that stock is prevailing on others, it is necessary to create an appropriate ambient by means of particular apparatuses, and then to fix the bio-mass onto an atoxic substratum with a neutral ph of inorganic nature, like bentonite and/or organic, like vegetal starch. Following to such treatment the bio-mass becomes pulverulent. If the bacteric powder is used in marine or lake ambients, it should be additioned with nutrients of phosphorous and azote base, put into atoxic paraffin microcapsules, that belong to the main features of the present invention.

By means of the use of appropriate apparatuses, it has shown to be possible to realize the production process in laboratory, based - according to the present invention - onto a development due to specific fermentation of a broth-culture (the most appropriate for the growth of the requested stock), mainly consisting in bacteriologically pure sea-water (if necessary previously sterilized), having a temperature around 28°, additioned with nutrient salts (not being micro-incapsulated) and of products able to neutralize the toxic-harmful metals eventually present in the water solution. Furthermore, it is necessary to give the bacteria the organic carbon indispensable to their growth, that usually is present in raw oil, while the oxygen is provided by a liquid bio-catalyst poured into the fermentator and by a particular "cavitation" system. If necessary, the ph of the broth-culture, that must be slightly basic, will have to be corrected, according to the situations, with acidificators or alkalifiers.

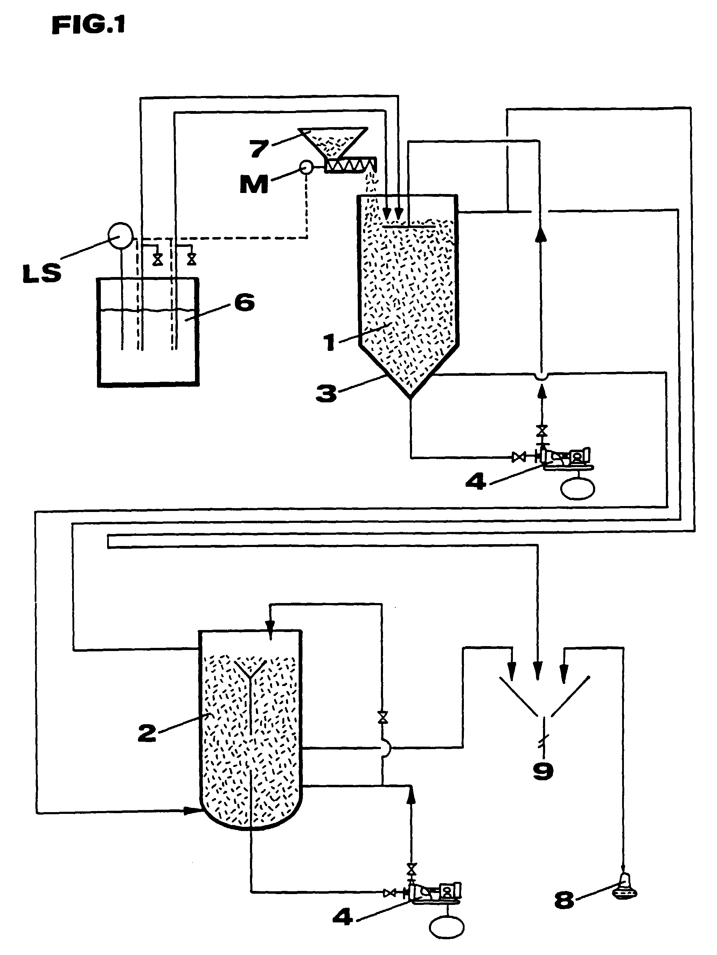

Practically, the production process is actuated by means of a hydraulic system shown in figure 1, out of plastic atoxic material, in which the broth-culure is circulating, and mainly consisting of:
1) - a fermentator containing the broth-culture;
2) - a magnetic dragging pump with a "soft" propeller;
3) - a bacteric anti-shock.

The fermentator may be with superficial getting 1 or ground getting 2; in the first case the broth-culture is aspired to the surface by means of a pump that re-introduces the same into the low part of said fermentator (figure 1), giving the bio-mass a hydrodynamic push and a consequent whirling motion favoured by the funnel shape of the invitation 3 placed at the centre of the fermentator. In the second kind, the broth-culture is aspired from the bottom and re-introduced to the surface; in this case also a whirling motion is created that in turn causes an aerobic peristaltic cavitation phenomenon similar to the one that occurs in the fermentator of the first kind, but without arrhythmy, to as to maintain said broth-culture constantly air saturated.

The main dimensional features that are equal for both kinds of fermentators, are the following:
a) a volume comprised between 100 and 1,000 litres,
b) a diameter comprised between 0.50 and 1.00 meter,
c) a height minor or equal to twice the diameter.

The circulation pumps of the broth-culture must have two main features: they shall not transmit heat to sad broth-culture and they shall not cause the breaking of the bacteric cell membranes. Therefore magnetic dragging pumps are believed to be more appropriate, with low revolution number - however not above 4,000 r.p.m. -, low manometric prevalence and an open kind impeller, preferably hand-turned.

The metabolic processes of the marine micro-organisms is catalized - as has been discovered - by a particular substance which has been given the name of 'bio-catalyst' having a pseudo-enzymatic action as, even not beeing an enzyme, it has all features of the same. It shows up in the shape of micronized powder completely lacking pathogenous micro-organisms, and consists of a mixture of various elements each of which gives the bio-catalyst particular features. The main feature consists in the capacity of producing rising oxygen of biologic nature due to some photochemiosynthetical micro-organisms living therein, the same who three and a half billion years ago gave their primordial oxygen contribution to the atmosphere creating the conditions that would have allowed, years later, the evolution of more complex living forms and that still today, together with the plants, help to maintain the air mixture composition constant.

This synergy prooves to be particularly important when the marine bacteria are to be used in the depurative processes as, beyond the acceleration of the metabolism of said processes, said synergy is a real protection for said bacteria as it makes them less sensible to the salinity variations and therefore makes possible their use also in fresh water (salt-tolerance).

Furthermore, the hyperactivation of he bacteria due to the bio-catalyst eliminates the bad smells in the depuration processes, allows the reduction of the muds volume and prevents the "balcking" effect.

The other details of the figure show:
- pumps 6 for the rising of the mess waters;
- the bacteria dosage 7;
- the drainage pump 8;
- the way to the sewage 9.

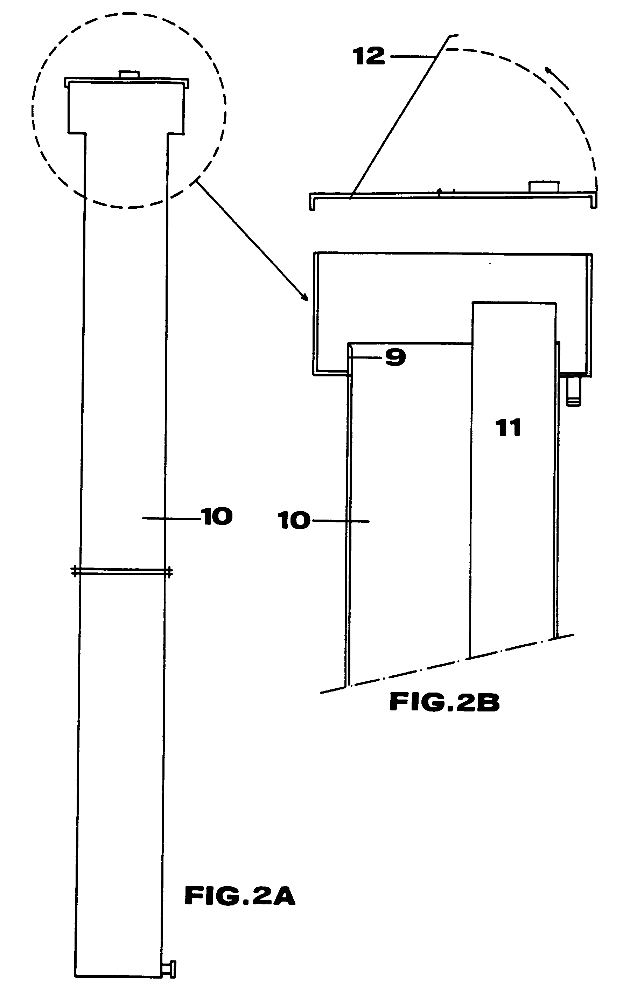

For the production of the bio-catalyst, the present invention provides the use of an apparatus shown in figures 2a and 2b, completely out of atoxic material, having a cylindrical shape 10 and a diameter variable between 0.40 and 1.20 meters and a height comprised between 4.00 and 6.00 meters. At the top of said column a weir 9, a collection channel, a vertical tube 11 having a diameter of 10-12 centimeters and a length of 1.00 to 1.50 meters, and a cover 12 are placed.

Into said tube 11 an anhydrous catalyst together with micronized water will be introduced, and the falling thereof will be checked by a band propeller (D.N.A. configuration) or by an overturned roof system.

For starting a fermentator a well determined process must be followed: first of all, the bio-catalytic powder must be hydrated with a liquid bio-catalyst, and the column to be activated must be filled up with this mixture for the height of at least one foot. The moisturized material will be placed into a container for fermentation, and said container is out of atoxic material, sealed, placed in a dark ambient and kept at a constant temperature for a period of two weeks. At the same time, the column must be filled up with drinking water or in any case with water in which no toxins like atrazine, pesticides or heavy metals are present performing, where it should be necessary, a previous filtering and detoxification on active carbon. After seven days the column will be emptied and then filled up again, this time with warm water for neutralizing the eventual presence of watersoluble toxins along the walls of said column. For the warming up of the water a sealed resistance may be placed onto the bottom or a resistance combined with a mixer may be used. Also this treatment lasts a week, and when this week has passed the column will be emptied again, filled up again for 2/3 of its height always with detoxified water - and into said water the humidified and fermentated catalyst is poured; when the catalyst has fouled for 25-30 minutes, new water is added up to the edge of the weir. The time requested for this treatment is a week in stand-by.

Before delivering the feeding capacity to the column devellopping a bio-catalyst (C.S.B.), it should be made sure that the process has started introducing an apposite instrument into the column consisting of a tetrahedron of small zinc rods and a metal net; the outcome of gaseous bubbles from the bottom of the column and mainly consisting of oxygen produced by 'rodospirillacee' and other photochemiosynthetic micro-organisms present in the sediment substrate, usually shows that the process has started; it is also necessary to analise the composition of the gas each week. The sediment substrate must be renewed every day by means of an anhydrous catalyst introduced into the propeller tube inside the column.

The synergic combination of the bio-catalyst with the marine bacteria makes it possible to intervene successfully in many different depuration and depollution processes.

On the practical plane, the bacteria must be brought into contact with the materials to be degradated and that must be placed in a water solution.

The specific tecnologies are diversified according to the matter to be depured; e.g. if sewage waters are brought to a treatment plant, the bacteria will be poured into the oxydation basin; if the problem is a leaking in the sea of raw oil, it will be necessary to sprinkle bacteric powder onto the spot formed on the surface, integrated with insidpensable and specific nutrients appositely placed into micro-capsules. This process has prooved to be optimal for the maximum reduction of the marine depollution times. Infact, for quickly starting the bacteric action, they must be enriched with nutritive salts, placed in micro-capsules, with azote and phosphorous and in perfect balance; in this way, they are gradually giving away to the oil-water 'inter-facies', and so on.

In particular, the activation of the bacteria by means of above described process may also be performed in depuration plants, by means of the installation of fermentators and C.S.B.

## Claims

1. A biocatalyst for use on water surfaces characterized in that it comprises an anhydrous bacteric powder comprising the strain "rodospirillace" and other photochemiosynthetic microrganisms as well as nutritive elements based on nitrogen and phosphorus, and placed into microcapsules.

2. A process for depolluting water by means of biodegradation comprising bringing into contact the water to be degraded with natural marine bacteria and the biocatalyst according to claim 1.

## Patentansprüche

1. Hydrokatalysator, auf der Wasseroberfläche anzuwenden, gekennzeichnet durch wasserfreien Bakterienstaub, bestehend aus "Rodospirilacee" und anderen fotochemiosyntetischen Mikroorganismen oder anderen Nahrungselementen, die auf Stickstoff und Phosphor gründen und in Mikrokapseln entralten sind.

2. Verfaheren zur Reinigung des Wassers durch Biodegradierung, darin bestehend, dass man das zu degradierende Wasser mit den natürlichen Meeresbakterien und dem Biokatalysator in Kontakt bringt.

## Revendications

1. Un biocatalyseur à user sur la surface de l'eau, caractérisé par la poussière bactérienne anhydrite qui comprenne l'espèce de "rodospirilacee", des autres micro-organismes photochimiosynthétiques et des éléments nutritifs basès sur azote et phosphore et placés dans microcapsules.

2. Un processus pour la dépuration des eaux au moyen de la biodégradation qui consiste dans le fait qu'on porte l'eau à dégrader en contact avec les bactèries marins naturels et le biocatalyseur.
